# FASCICULE DE BREVET EUROPEEN

(11) **EP 1 372 437 B1**
(45) Date de publication et mention de la délivrance du brevet: **03.01.2007**
(21) Numéro de dépôt: 02702464.5
(22) Date de dépôt: 08.02.2002
(51) Int. Cl.: A47F 3/04, F25D 25/02

(54) **ETAGERE POUR LE SUPPORT D'ARTICLES, EN PARTICULIER DANS DES INSTALLATIONS REFRIGEREES**
TABLETT ZUM TRAGEN VON GEGENSTÄNDEN, INSBESONDERE FÜR KÜHLSCHRÄNKE
SHELF FOR SUPPORTING ITEMS, PARTICULARLY IN REFRIGERATED INSTALLATIONS

(30) Priorité: 27.03.2001 FR 0104129
(43) Date de publication de la demande: 02.01.2004
(73) Titulaire: SAINT-GOBAIN GLASS FRANCE, 92400 Courbevoie (FR)
(72) Inventeur: VARDON, François, I-12011 Borgo San Dalmazzo (IT)
(74) Mandataire: Goldenberg, Virginie Isabelle
(86) Numéro de dépôt international: PCT/FR2002/000482
(87) Numéro de publication internationale: WO 2002/076268

(56) Documents cités:
- EP-A- 0 679 848
- EP-A- 0 973 000
- DE-A- 3 141 482
- US-A- 5 944 324
- PATENT ABSTRACTS OF JAPAN vol. 1999, no. 04, 30 avril 1999 (1999-04-30) & JP 11 013355 A (NIPPON SHEET GLASS CO LTD), 19 janvier 1999 (1999-01-19)
- PATENT ABSTRACTS OF JAPAN vol. 015, no. 232 (M-1124), 13 juin 1991 (1991-06-13) & JP 03 070626 A (ASAHI GLASS CO LTD), 26 mars 1991 (1991-03-26)

## Description

La présente invention concerne une étagère (ou tablette) pour le support d'articles et destinée à être fixée ou montée, en position horizontale ou approximativement horizontale, dans le châssis d'un meuble. En particulier, elle concerne une étagère apte à être utilisée dans des compartiments réfrigérés (armoires réfrigérées, appareils frigorifiques, réfrigérateurs, etc.) pour le support d'articles, en particulier d'aliments.

Dans les réfrigérateurs ménagers, il est connu d'utiliser des étagères sous forme de plaques pleines en matière plastique ou en verre, de telles plaques étant simples à nettoyer, hygiéniques et pouvant supporter toutes sortes de denrées alimentaires. Ces plaques sont habituellement munies d'un entourage en matière plastique permettant d'éviter des risques de blessures sur les arêtes vives des plaques et/ou de renforcer lesdites plaques. Une réalisation précise et esthétique de cet entourage permettant de garantir une bonne étanchéité entre l'entourage et la plaque consiste à injecter la matière plastique sur le pourtour de la plaque posée dans un moule afin qu'elle prenne la plaque en sandwich (ou en tenaille) en l'enserrant sur son chant et sur chacune de ses faces supérieure et inférieure. Il s'agit de la méthode "d'encapsulation". La matière peut également être injectée autour des éléments de support de l'étagère permettant de monter celle ci dans le réfrigérateur. L'encapsulation requiert cependant des installations spécifiques, limitées à chaque modèle de tablette réalisé, peut être complexe, coûteuse, les étagères obtenues pouvant également présenter des inconvénients (capacité d'adaptation à différents types de structures limitée, etc.).

Il est également connu de former l'entourage plastique indépendamment de la plaque (entourage rapporté), puis de solidariser les deux par collage. Cette méthode présente des avantages en termes de simplicité, de coût, de facilité d'adaptation, etc. mais peut poser des problèmes en termes de tenue ou pérennité de l'assemblage et/ou d'esthétique et/ou d'étanchéité.

L'objet de la présente invention est de fournir des étagères améliorées par rapport aux étagères existantes telles que précédemment décrites. Ce but est obtenu grâce à l'étagère selon la revendication 1. Cette étagère comprend au moins un panneau, destiné à recevoir des articles, et au moins une structure (ou entourage) plastique rapportée épousant le cas échéant le chant du panneau et/ou exerçant une pression latérale sur le chant du panneau (par exemple tenant le panneau par compression de son chant ou exerçant une pression radiale sur le panneau). Cette adaptation aux contours du panneau et/ou cette compression sont avantageusement obtenues par la rétractation du plastique (ou de la structure plastique), comme explicité ultérieurement.

Le panneau (ou plateau ou plaque) de l'étagère selon l'invention est généralement rectangulaire, rigide, présente une surface approximativement plane pour le support d'articles (face supérieure, en position d'utilisation) et est peu épais par rapport à sa surface. Il est généralement formé d'une seule pièce (monolithique) mais peut aussi être plus complexe (sous forme, par exemple, d'une structure feuilletée comprenant plusieurs feuilles de verre et/ou de matière(s) plastique(s) et/ou d'autres matières). Il peut être opaque ou translucide mais est de préférence au moins en partie transparent, pour des raisons esthétiques et pratiques; il peut aussi être muni de motif(s) ou couche(s) décorative(s) ou fonctionnelle(s) (par exemple en émail ou encre) sur une ou plusieurs de ses faces.

Le panneau peut être par exemple en verre, en polycarbonate, et/ou en polyméthyl méthacrylate. De préférence, il comprend au moins ou se présente sous forme d'une feuille de verre, matériau avantageux en termes d'hygiène, de rigidité, de pérennité, etc. Pour des raisons de sécurité, ce verre est généralement trempé, en particulier dans le cas d'un panneau monolithique. Le panneau est habituellement plein, mais peut aussi comprendre un ou des reliefs et/ou évidements et/ou trous (par exemple pour la circulation d'air) et/ ou avoir subi un ou des traitements de surface tels que sablage, stries, etc.

La structure plastique (ou support ou entourage plastique) permet le support du panneau et le revêtement de ses arêtes vives pour une manipulation plus confortable et sûre de l'étagère. Généralement, elle se présente sous la forme d'un cadre, ce cadre offrant une ou des surfaces d'appui (ou surface porteuse ou embase) pour le support du panneau, ces surfaces d'appui, horizontales ou approximativement horizontales en position d'utilisation, délimitant une zone dont les dimensions correspondent approximativement aux dimensions de la face inférieure du panneau. Ces surfaces d'appui peuvent par exemple être sous forme de petites languettes ou tétons faisant saillie par rapport au cadre, en face inférieure en position d'utilisation et autour de l'ouverture centrale du cadre où doit être placé le panneau ; il peut aussi s'agir d'une surface d'appui continue en forme de cadre soutenant le panneau à sa périphérie ou bien la structure plastique peut également être pleine et soutenir le panneau sur toute sa face inférieure, ou soutenir le panneau en d'autres endroits que sa périphérie.

La structure plastique peut présenter une faible épaisseur (excédant généralement de peu celle du panneau) ou une épaisseur plus importante, par exemple sur certaines parties de sa périphérie, avec une ou des parois sur l'un et/ou l'autre des côtés pouvant s'élever au dessus du plan du panneau et/ou dépasser du plan du panneau par le dessous (l'étagère étant considérée dans sa position d'utilisation).

La structure plastique borde généralement le panneau sur toute sa périphérie, en particulier sur son chant (ou, en d'autres termes équivalents, son épaisseur ou ses chants si l'on considère chacun des côtés séparément) et éventuellement sur une partie au moins d'au moins une des faces supérieure et inférieure du panneau (par exemple elle peut recouvrir la face supérieure en tout ou partie de sa périphérie sur une largeur de quelques millimètres et présenter des parties légèrement saillantes sur sa face inférieure pour le support du panneau, ou elle peut ne pas recouvrir la face supérieure du panneau et simplement recouvrir une partie, voire la totalité, de sa face inférieure). Par ailleurs, les parois peuvent ne border qu'une partie du chant (ou des chants), une paroi pouvant par exemple avoir des ouvertures sur une partie du chant en au moins un des côtés.

Les bords ou parois de la structure plastique peuvent être droits et uniformes ou de forme plus complexe, notamment peuvent présenter des parties ou extensions périphériques dans des buts fonctionnels ou esthétiques. Par exemple, la structure peut avoir une extension formant une poignée sur son bord avant (ou sur un côté de l'étagère destiné à rester libre) et/ou peut présenter un dosseret, par exemple sur son bord arrière, servant notamment de butée pour empêcher que les produits entreposés sur l'étagère viennent au contact de la paroi d'un meuble réfrigéré la renfermant et/ou peut avoir des parois ou extensions latérales prolongées le cas échéant par-des -ailettes ou tétons ou saillies et aptes à glisser entre des rails ou sur des supports ménagés dans les parois latérales d'un meuble, etc. Des éléments de renforcement, de fixation, etc. peuvent également être rapportés ou prévus dans la structure plastique, tels que des éléments d'assemblage métalliques (comme explicité ultérieurement), ou des nervures de renforcement ou des moyens d'accrochage, etc. On peut également prévoir au moins un canal, pour la récupération de liquides en cas de besoin ou pour l'écoulement des liquides.

Dans un mode de réalisation, la structure plastique peut avoir ou coopérer avec des moyens d'éclairage (de préférence de faible tension). Par exemple, une lumière peut être située dans un logement prévu dans la structure plastique. Une surface (par exemple inférieure) du panneau peut être traitée ou usinée, par exemple sablée ou rainurée, afin d'amplifier l'effet d'éclairage par réfraction du faisceau de lumière émis par une source lumineuse. L'alimentation électrique pour allumer la lumière peut être associée à l'ouverture de la porte du conteneur dans lequel se trouve l'étagère ou peut être associée au fonctionnement d'un commutateur spécial à bouton-poussoir.

La structure plastique est, selon la définition donnée plus avant, une pièce rapportée, c'est-à-dire qu'elle n'est pas formée directement sur le panneau mais est formée séparément (ou est préformée) avant d'être assemblée au panneau. Cette structure nécessite un matériel moins coûteux que dans le cas des étagères formées par encapsulation, est plus simple et offre une plus grande flexibilité.

Dans l'étagère selon l'invention, la structure plastique épouse le cas échéant le chant du panneau et/ou exerce une pression latérale sur son chant. Il peut s'agir de l'ensemble des chants comme vu précédemment ou éventuellement une partie des chants. Avantageusement, la structure plastique épouse au moins deux parties de chants en regard (par exemple une partie de chacun des côtés latéraux), et de préférence au moins deux côtés en regard sur toute leur longueur et de façon particulièrement préférée épouse au moins une partie des chants sur tous les côtés de la tablette (avant, latéraux, arrière). Avantageusement, la structure épouse le panneau sur toute sa circonférence. Elle épouse également le panneau sur au moins une partie de sa hauteur (ou épaisseur), voire sur toute sa hauteur.

Cette adaptation aux contours du panneau est obtenue par la rétractation du plastique. Elle peut aussi être obtenue en utilisant une structure plastique formée d'au moins deux matières plastiques (structure bi-matières) dont une plus souple, destinée à être au contact du panneau (en particulier au contact du chant du panneau) et épousant mieux sa forme, cette matière plus souple recouvrant en partie, et éventuellement en totalité, l'autre matière plus rigide (assurant la tenue de la structure).

Alternativement ou simultanément à l'adaptation aux contours du panneau, la structure plastique peut presser également le chant du panneau (ou exercer une pression radiale sur le panneau). La structure plastique tient (ou retient) ainsi le panneau par compression de ses chants (au moins en partie, en particulier au moins une partie de 2 côtés en regard), ce qui permet une meilleure rigidité et pérennité de l'association. Cette pression peut être obtenue mécaniquement par emboîtement forcé (c'est-à-dire exercé en forçant) et obtenue par la rétractation de la structure plastique, comme explicité ci-après. Dans la rétractation de la structure plastique, la force de compression de la structure sur le chant du verre est généralement de l'ordre de quelques MPa, de préférence d'au moins 5 MPA, et n'excède pas 15 MPa, par exemple est de l'ordre de 8 à 10 MPa.

Comme indiqué précédemment, l'adaptation exacte aux contours du panneau et la retenue par compression radiale sont obtenues par la rétractation du plastique (l'étagère selon l'invention étant définie selon la revendication 1 en ce que le panneau est rendu solidaire de la structure par rétractation de la structure (ou du plastique de ladite structure)). A noter que la présente invention couvre également comme étagère, toute étagère, notamment pour réfrigérateur ou similaire, comprenant au moins un panneau et au moins une structure plastique rapportée, l'étagère étant obtenue par rétractation de la structure, même si cette rétractation n'est pas suffisante pour aboutir à une adaptation exacte aux contours du panneau. Dans ce cas, des moyens supplémentaires peuvent être utilisés pour solidariser le panneau et la structure plastique, tels que clipsage (emboîtement, par exemple, le cas échéant, au moyen des languettes ou tétons formant les surfaces d'appui), et/ ou collage, comme explicité ultérieurement.

Selon la ou les matières plastiques utilisées pour former la structure plastique, la rétractation peut s'opérer par refroidissement et éventuellement par changement d'état de la matière plastique (par exemple passage à l'état semi-cristallin avec réorganisation interne de la matière) et est plus ou moins importante. Le retrait recherché est généralement d'au moins 0,25% (par rapport à la largeur et/ou à la longueur) de la structure, et avantageusement d'au moins 0,5%, et n'excède pas 2 % (avantageusement n'excède pas 1,5 %, voire selon les cas 1,2 %) de ladite largeur (et/ou longueur) pour éviter une déformation visible des parois et une détérioration ou un aspect inesthétique de l'ensemble.

Les avantages de cette rétraction et de l'étagère définie précédemment sont nombreux : il n'est pas nécessaire d'usiner les côtés du panneau et des parties de la structure pour permettre une meilleure connexion, la structure plastique vient le cas échéant compenser les tolérances du panneau (c'est-à-dire corriger les écarts de dimensions des plaques relatifs aux fabrications mécaniques desdites plaques) et assure une meilleure esthétique voire étanchéité à la jonction panneau/structure; de plus, outre un avantage économique par rapport aux étagères obtenues par encapsulation, l'étagère selon l'invention est également plus pratique, la surface utile pour le support d'objets pouvant être plus importante, la matière plastique ne venant pas nécessairement recouvrir une partie de la face supérieure du panneau (ou inversement de la face inférieure, d'où un gain de matière plastique). L'étagère est aussi plus simple de fabrication et offre plus de possibilités --d'adaptation aux structures existantes. Elle présente en outre une rigidité -et pérennité particulièrement satisfaisantes.

La présente invention concerne également un procédé d'obtention de l'étagère selon lequel la structure plastique est formée séparément du panneau par moulage, à chaud, le panneau étant assemblé à la structure plastique en sortie de moule avant la rétractation complète du plastique.

Le moulage de la structure se fait par exemple en injectant une matière plastique, préalablement chauffée et fondue, dans un moule fermé ou une presse, la matière plastique étant par exemple et avantageusement du polypropylène, éventuellement chargé de talc pour améliorer sa tenue mécanique, ou de l'acrylonitrile butadiène styrène (ABS), etc., la matière plastique étant choisie en fonction des caractéristiques, notamment de résistance, recherchées pour la structure, mais également en fonction de sa capacité à se rétracter comme recherché dans l'invention. Une fois moulée, la matière se refroidit et se solidifie, dans un premier temps dans le moule (ou la presse) pour donner un produit semi fini pouvant être extrait du moule sans perdre globalement sa forme, puis hors du moule, le phénomène de retrait s'opérant surtout après ouverture du moule et à plus forte raison après extraction du moule (les dimensions se réduisant mais la forme restant sensiblement la même).

Avantageusement le panneau est assemblé sur la structure plastique après l'ouverture du moule (ou en sortie de presse), et de préférence hors du moule, de préférence avant que le retrait n'atteigne 40% (et de préférence 30%) du retrait total. En pratique, cet assemblage se fait souvent dans les 10 minutes, et de préférence dans les 4 minutes, suivant l'ouverture du moule (ou la sortie de presse), le plastique pouvant continuer à se rétracter par la suite pendant plusieurs heures mais de façon de plus en plus limitée.

En cas de traitement intermédiaire, tel que le dépôt d'une colle sur la structure (comme explicité ci après), entre le moulage et l'assemblage, et afin d'éviter un retrait trop important ou rapide du plastique, il est également possible de prévoir un maintien de la structure en température en sortie de moule ou presse (par exemple un maintien de la structure à une température de l'ordre de 60 °C dans le cas du polypropylène), par exemple-en prévoyant un tunnel de maintien en température sur la ligne de fabrication.

La rétractation du plastique permet une meilleure adaptation aux contours du panneau mais peut ne pas être suffisante pour garantir la pérennité de l'assemblage (il peut encore y avoir du jeu dans certains endroits à l'interface de la structure et du panneau ou une compression radiale insuffisante pour tenir le panneau). Dans ce cas notamment, la tenue de l'assemblage en termes de résistance mécanique et/ou d'étanchéité peut être assurée conjointement ou alternativement par d'autres moyens tels que clipsage et/ou collage. Par exemple, des languettes ou tétons peuvent être prévus sur la structure pour tenir le panneau par clipsage, le panneau étant alors inséré, généralement en force, entre les languettes ou tétons et le reste de la structure, avant rétractation complète de la structure. Dans un mode d'assemblage avantageux, les languettes ou tétons se trouvent sur le dessous de la structure et servent aussi de surface d'appui au panneau, le panneau étant rentré (généralement en force) du côté de la structure constituant la face inférieure de l'étagère en position d'utilisation (la structure dans ce cas étant éventuellement retournée lors de l'assemblage ou sortant éventuellement du moule en position retournée). Ce mode d'assemblage sur la face inférieure peut aussi être utilisé avec avantages indépendamment de la rétractation de la structure.

De préférence, avant l'assemblage et généralement après ouverture du moule (sauf éventuellement dans le cas d'un dépôt par bi-injection, comme évoqué ultérieurement), on procède également à un dépôt de colle(s) sur au moins une partie de la structure devant être au contact du panneau (une partie de la surface porteuse et/ou éventuellement sur des parties de la structure devant être au contact du chant) afin d'améliorer encore l'étanchéité et l'adhésion entre la structure et le panneau. Il s'agit de préférence d'une colle dite élastique (ou viscoélastique ou molle), par exemple de type polyuréthane, permettant de compenser les dilatations respectives du panneau et du plastique dues aux changements de température lors du transport ou de l'utilisation (une colle "dure" risquant de casser par cisaillement ou de se détacher lors des changements de température). L'étagère selon l'invention peut ainsi comporter, outre la structure plastique et le panneau, une colle, déposée préférentiellement suivant la périphérie de la structure (sous forme par exemple d'un cordon souple écrasé lors de l'association du panneau et de la structure).

A noter que dans le mode de réalisation où l'assemblage se fait en utilisant à la fois la rétractation, le clipsage et le collage, la structure, en sortie de moule et après transfert éventuel dans un tunnel de maintien en température, est munie de colle aux endroits appropriés avant clipsage du panneau et rétractation complète du plastique.

Comme évoqué précédemment, la structure plastique peut aussi être formée d'au moins deux matières plastiques (structure bi-matières) dont une plus souple recouvrant l'autre plus rigide et destinée à être au contact du panneau afin de mieux épouser sa forme, la matière souple étant écrasée lors de l'association du panneau et de la structure (à froid à partir de la structure formée et du panneau, ou à chaud comme dans le procédé précédemment décrit) pour un meilleur contact et une meilleure étanchéité entre le panneau et la structure plastique. Cette structure plastique bi-matières peut être réalisée par bi-injection (injection des différentes matières dans un même moule, généralement l'une après l'autre).

Alternativement à la colle et/ou à la constitution de la structure plastique, ou de surcroît, on peut utiliser un ou des cordons ou joints d'isolation, autocollants ou non, sous forme ou non d'une mousse (ou d'un adhésif hot melt gonflé de bulles d'air); on peut également donner au joint ou au cordon de colle déposé une forme particulière (par exemple conique) pour un meilleur contact lorsque le joint ou la colle est écrasé mécaniquement entre le panneau et la structure plastique. La surface du panneau peut avoir été préalablement traitée (au moins partiellement), par exemple sablée, afin d'améliorer sa prise par collage, et/ou la structure plastique, après l'ouverture du moule et avant l'application de colle, peut avoir subi un traitement de surface (sur les parties destinées à recevoir la colle) tel qu'un gaufrage (formation de stries) ou la formation de rugosités ou un traitement -plasma (par projection- d'un gaz ionisé ou d'une flamme sur la surface plastique) permettant d'augmenter la surface de contact entre le plastique et la colle et/ou de créer d'autres points d'attache, ou encore peut être munie d'une rainure pour recevoir le joint ou la colle.

Comme précédemment évoqué l'assemblage peut se faire sur la face inférieure de la structure ; elle peut aussi se faire en face supérieure, la face supérieure du panneau restant découverte ou venant s'insérer dans des clips ou parties saillantes. En l'absence de telles parties saillantes, la rétractation du plastique ou un traitement thermique supplémentaire peut également engendrer l'apparition d'un petit bourrelet venant appuyer sur la face supérieure du panneau (en position d'utilisation) et le cas échéant sur le joint et/ou la colle et/ou la matière souple de la structure plastique pour assurer une étanchéité supplémentaire. Eventuellement et selon la matière plastique utilisée, l'étagère peut également être obtenue seulement après un traitement thermique supplémentaire de la structure plastique (réchauffage) postérieur au moulage de ladite structure, le panneau étant assemblé à la structure après ce traitement thermique supplémentaire, une colle et/ou un traitement de surface étant éventuellement déposé ou effectué préalablement à l'assemblage.

En plus de la rétractation de la structure plastique, on peut également réaliser la structure plastique par une technique dite "d'air moulding" (ou injection plastique assistée par gaz), cette technique permettant d'obtenir une étagère présentant une bonne tenue et rigidité avec moins de matière qu'un moulage classique. Cette technique consiste à introduire pendant le moulage un gaz inerte pressurisé (par exemple de l'azote) dans le plastique en fusion, après le remplissage partiel de la cavité du moule, afin de créer à l'intérieur de la pièce moulée des zones d'épaisseur renforcée et des zones de vide. L'air molding permet par exemple de créer des renforts (surépaisseurs, nervures, etc.) sur les côtés de la structure plastique et éventuellement des bras latéraux de support dans le corps même de la structure plastique. Cette technique permet également un refroidissement plus rapide de la pièce moulée et des cycles de production plus courts, ainsi que l'obtention d'un état de surface particulièrement satisfaisant.

En rapport avec certaines destinations de l'étagère selon l'invention, l'invention propose également des éléments d'assemblage (ou de montage) de l'étagère dans des meubles (par exemple pour des montages en porte à faux), ces éléments d'assemblage étant fixés par clipsage (ou accrochage, en particulier étant fixés mécaniquement par des moyens d'imbrication tels que des évidements et/ou des protubérances, des dents, des ergots) sur la structure plastique de l'étagère (plus exactement en dessous, en règle générale) et présentant avantageusement au moins trois parties. Ces éléments sont initialement sous forme (chacun) d'une lamelle (ou ailette ou plaquette), généralement métallique, et pliée (par exemple par estampage) de façon à présenter une section droite approximativement en forme de L avec au moins une aile du L (ou première partie de l'élément) destinée à être clipsée, sous le panneau, contre une paroi verticale de la structure plastique dépassant de la face inférieure du panneau, et au moins une partie (seconde partie de l'élément) de l'autre aile du L destinée à être clipsée sous la surface porteuse de la structure plastique. Ces éléments présentent également initialement à une de leurs extrémités (longitudinales) un crochet pour le montage éventuel en porte à faux de l'étagère dans un meuble. La troisième partie est formée par l'extrémité d'une aile; selon le mode de montage envisagé, cette extrémité est soit pliée de façon à reborder une autre partie de l'étagère, en particulier de la structure plastique (les trois parties maintiennent donc dans ce cas là l'étagère suivant trois directions, assurant ainsi une meilleure stabilité et une meilleure tenue de l'ensemble), soit façonnée pour former une glissière destinée à coopérer avec des moyens supplémentaires d'accrochage en porte à faux du meuble (pour former une étagère coulissante), ces moyens supplémentaires (sous forme par exemple d'un cadre métallique coopérant avec les éléments d'assemblage) étant dans ce cas accrochés par des crochets au meuble et les crochets des éléments d'assemblage pouvant alors être supprimés par découpage. L'adaptation de la troisième partie des éléments d'assemblage et la découpe éventuelle du crochet peuvent -avantageusement se faire au dernier moment selon le type d'accrochage requis. On peut ainsi utiliser la même étagère pour tout type d'accrochage (par exemple sans les éléments d'assemblage pour un maintien sur des parois latérales du meuble, ou avec les éléments d'assemblage pour un accrochage en porte à faux, que ce soit en mode fixe ou coulissant). A noter que les éléments d'assemblage précédemment décrits sont également avantageux pour tout autre type d'étagère que celle selon l'invention.

Les éléments d'assemblage précédemment décrits peuvent, selon les cas, être considérés indépendamment de l'étagère ou comme en faisant partie et peuvent être fixés définitivement ou de manière détachable à l'étagère. Ils garantissent non seulement la fixation de l'étagère à la paroi, mais peuvent aussi contribuer à renforcer l'étagère. Généralement, au moins deux éléments d'assemblage sont nécessaires au montage de l'étagère dans un meuble lorsque cette étagère doit être montée en porte à faux, ces éléments étant généralement fixés sur les côtés latéraux des étagères. Comme indiqué précédemment, ces éléments peuvent également coulisser sur un cadre fixé au meuble, ce cadre ou glissière étant avantageusement formé en un seul morceau (par exemple par estampage) pour une meilleure résistance et étant généralement métallique. Dans ce cas et avantageusement, le coulissement se fait entre les éléments d'assemblage jouant le rôle d'éléments intermédiaires et le cadre support supplémentaire, et non directement entre un cadre support et la structure plastique.

Comme indiqué précédemment, lorsque l'étagère est destinée à être fixée en porte à faux sur la paroi arrière du meuble, l'étagère présente au moins deux parties en saillie sur son côté arrière (provenant des éléments d'assemblage lorsque l'étagère est destinée à être montée de façon fixe ou du cadre supplémentaire lorsque l'étagère est destinée à être montée de façon coulissante), qui servent de crochets ou de dents pour venir en prise avec (et être coincés dans) des échelons ou des trous dans des rails fixés sur la paroi arrière du meuble afin que l'étagère soit en porte-à-faux vers l'avant sur ladite paroi.

L'étagère peut aussi être fixée sur des parois latérales d'un conteneur ou peut reposer ou coulisser sur des surfaces porteuses ou de guidage placées sur les côtés latéraux du conteneur par l'intermédiaire de sa structure plastique, et sans nécessiter les éléments d'assemblage précédemment décrits.

L'étagère est habituellement montée de manière détachable et/ou coulissante sur au moins une paroi du meuble ou réfrigérateur. Dans un mode de réalisation, l'étagère ou les éléments d'assemblage ou le cadre supplémentaire peuvent aussi avoir ou coopérer avec des dispositifs de sécurité anti-retrait, destinés à empêcher l'étagère de sortir par exemple des rails sur lesquels elle est fixée ou elle coulisse.

On peut également monter d'autres types d'éléments d'assemblage ou d'éléments intermédiaires que ceux précédemment décrits sur l'étagère selon l'invention, ces éléments pouvant par exemple comprendre des parties plastiques (ou être constitués d'une ou plusieurs matières plastiques et/ou de métal) ou des parties intégrées dans la structure plastique.

D'autres caractéristiques et avantages de l'invention apparaîtront dans la description ci-après de modes de réalisation non limitatifs de l'invention en référence aux dessins annexés dans lesquels :
- La figure 1 représente une vue schématique partielle en perspective éclatée d'une étagère selon l'invention et d'éléments d'assemblage pour sa fixation sur la paroi arrière d'un réfrigérateur;
- La figure 2 représente une vue schématique partielle en coupe de l'étagère avant et après rétractation du cadre;
- La figure 3 représente l'étagère de la figure 1 retournée (vue schématique du dessous) en perspective;
- la figure 4 représente une vue schématique partielle en perspective éclatée d'une étagère similaire avec cette fois des éléments d'assemblage et la glissière associée pour sa fixation en version coulissante sur la paroi arrière d'un réfrigérateur.

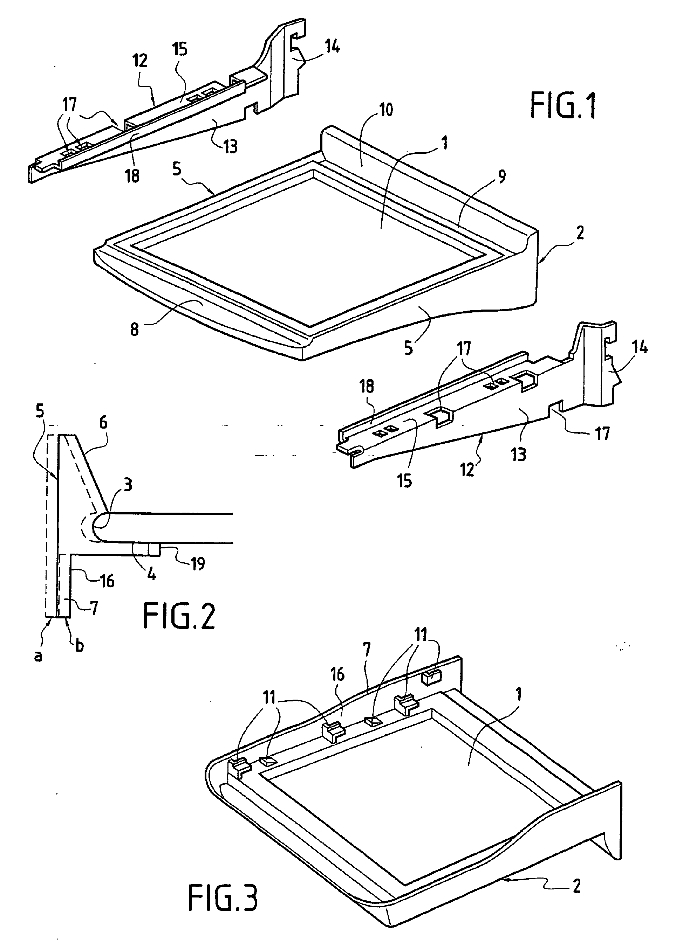

L'étagère décrite dans les figures 1 à 4 est adaptée notamment au support d'articles dans un réfrigérateur et comprend un panneau de verre 1 (éventuellement muni d'une bordure émaillée pour cacher la jonction avec la structure plastique, les parois latérales pouvant également le cas échéant masquer cette jonction par leur ombre projetée), muni d'une structure (ou entourage ou cadre) en polypropylène 2. Cet assemblage est obtenu de la façon suivante : on chauffe des granulés de polypropylène (de préférence chargé de talc pour augmenter la tenue mécanique du polypropylène) dans une chambre de plastification d'une presse à une température suffisante pour pouvoir injecter la matière plastique et on injecte la matière fondue dans le moule ou presse pour obtenir le produit semi fini qui par rétractation de la matière plastique donnera la structure 2. La matière se refroidit dans le moule et se solidifie à partir de 160°C sous forme d'un produit semi-cristallin. Quand on ouvre le moule pour retirer le cadre moulé, la plastique atteint environ 70°C. Le retrait du plastique commence alors à s'opérer de façon significative. Dans les 4 minutes (et de préférence dans les 1 à 2 minutes) suivant la sortie du moule, la surface 4 du cadre sur laquelle doit reposer le panneau subit éventuellement un traitement de surface (par exemple de type plasma), est de préférence encollée (les manipulations pouvant être automatisées) avec une colle élastique (éventuellement une rigole - non représentée - peut être prévue pour recevoir la colle sur la surface) et le panneau de verre est posé sur le cadre (position a du cadre représentée en traits fins et pointillés sur la figure 2). Le retrait continue alors à s'opérer (environ 75% du retrait a lieu dans les premières 15 minutes, l'obtention du retrait final pouvant prendre quelques heures) jusqu'à ce que le cadre atteigne sa forme définitive (position b du cadre représentée en traits épais sur la figure 2). Dans cet état, le cadre épouse et retient mécaniquement le verre sur son chant 3, avec une force de compression de l'ordre, par exemple, de 9 MPa s'exerçant sur le chant du verre. Sur un cadre de l'ordre de 420 mm de large, le retrait final peut atteindre pour le polypropylène jusqu'à 4 mm. L'assemblage obtenu est particulièrement solide et répond aux normes de sécurité.

Le cadre comprend ici une surface porteuse 4 sous forme d'un cadre, deux parois latérales 5 avec une partie supérieure 6 formant un petit rebord dépassant de la face supérieure du panneau et une partie inférieure 7 sous la face inférieure du panneau, une extension avant 8 formant une poignée pour la manipulation de l'étagère, une extension arrière avec éventuellement un canal 9 permettant la rétention ou l'évacuation des liquides en cas de renversement sur l'étagère et avec un dosseret 10 pour éviter le contact des articles avec la paroi arrière du réfrigérateur.

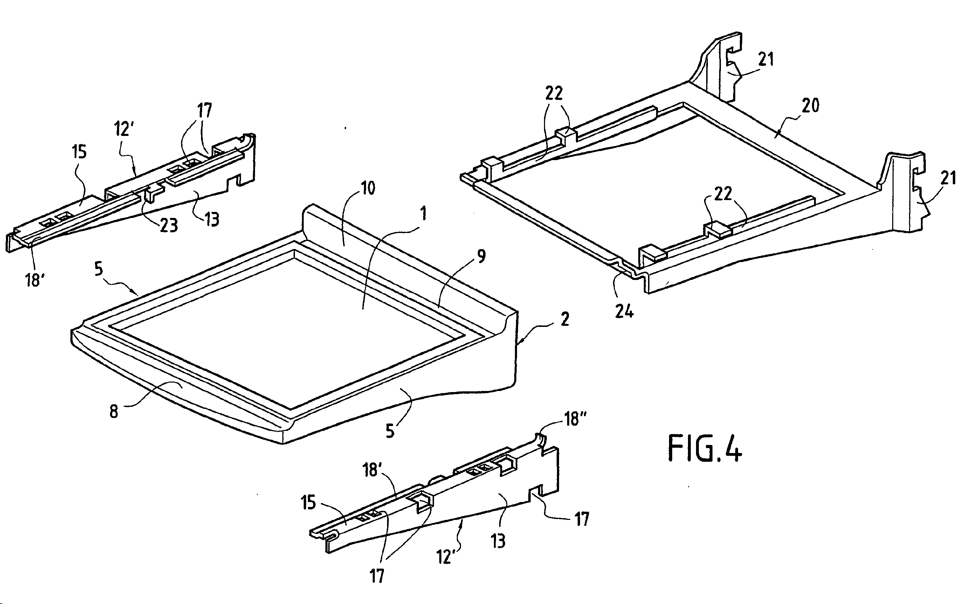

Le cadre peut aussi être muni de moyens d'accrochage (et/ou retenue et/ ou blocage) 11 (comme illustré en figure 3), sous forme d'ergots de protubérances, de clips, de butées, etc. permettant par exemple le montage des éléments d'assemblage 12 (figure 1) ou 12' (figure 4). Ces éléments, par exemple des plaques métalliques obtenues par estampage, présentent une première partie (ou aile) 13 munie initialement à l'une de ses extrémités d'un crochet 14 pour le montage sur des rails prévus sur la paroi arrière du compartiment réfrigéré (ce crochet étant découpé pour la version coulissante représentée en figure 4), une seconde partie 15, pliée par rapport à la première (l'ensemble présentant une section droite en L), la première partie étant clipsée sur la paroi interne 16 de la partie inférieure d'une paroi latérale 5 du cadre, la seconde partie étant clipsée sous la surface porteuse 4, le clipsage (ou la fixation ou l'imbrication) des éléments d'assemblage au cadre se faisant à l'aide de moyens complémentaires de ceux prévus sur le cadre (ici notamment des évidements 17), et une troisième partie 18, 18', soit pliée (figure 1) par rapport à la deuxième pour suivre les contours de la surface porteuse (par exemple couvrant une partie de son épaisseur 19), soit façonnée de façon à former une glissière (figure 4), le pliage selon la configuration choisie pouvant être effectué au dernier moment. Sur cette dernière version coulissante, on peut également prévoir une partie 18" ou ergot venant en butée contre l'épaisseur de la surface porteuse du cadre, le fait de border le cadre suivant trois directions ou parties permettant une meilleure tenue de l'ensemble.

L'étagère reçoit ici au moins deux éléments d'assemblage, chaque élément étant monté sous l'une des parois latérales de l'étagère, par exemple après stockage et séchage éventuels- de l'étagère obtenue comme décrit précédemment et selon le mode de fixation recherché.

Dans la version coulissante illustrée en figure 4, on utilise également un support métallique 20 ou glissière, formé en une pièce par exemple par estampage, muni de crochets 21 pour la fixation sur la paroi arrière d'un réfrigérateur, et présentant des surfaces 22 ou glissières destinées à coopérer avec les glissières correspondantes 18' des éléments d'assemblage pour permettre le coulissement de la tablette. Eventuellement des butées 23, 24 peuvent être prévues sur les éléments d'assemblage et le support coulissant pour bloquer la course de l'étagère à mi-chemin pour des raisons de sécurité.

L'étagère décrite précédemment peut être considérée comme simplement formée du panneau et du cadre (le cadre étant éventuellement façonné de façon à pouvoir être glissé par ses côtés dans les glissières latérales d'un réfrigérateur) ou peut être considérée munie des éléments d'assemblage, voir également du cadre supplémentaire précédemment décrit.

L'étagère selon l'invention est particulièrement adaptée au support d'articles et d'éléments dans un compartiment réfrigéré ou réfrigérateur (un réfrigérateur muni de la présente étagère étant également visé dans la présente invention) mais peut également convenir au support d'autres types d'articles dans d'autres types de meubles.

## Revendications

1. Etagère, notamment pour réfrigérateur ou similaire, comprenant au moins un panneau et au moins une structure plastique rapportée, **caractérisée en ce que** le panneau est rendu solidaire de la structure par rétractation de ladite structure après assemblage du panneau et de la structure.

2. Etagère selon la revendication 1, **caractérisée en ce que** la structure plastique rapportée épouse et/ou exerce une pression latérale sur le chant du panneau.

3. Etagère selon l'une des revendications 1 ou 2, **caractérisée en ce que** la structure plastique est formée d'au moins deux matières plastiques dont une plus souple, destinée à être au contact du panneau, et recouvrant au moins en partie l'autre plus rigide.

4. Etagère selon l'une des revendications 1 à 3, **caractérisée en ce que** le panneau est aussi rendu solidaire de la structure par clipsage et/ou collage.

5. Etagère selon l'une des revendications 1 à 4, **caractérisée en ce qu'**elle comprend en outre au moins une colle élastique et/ou au moins un joint d'isolation souple.

6. Etagère selon l'une des revendications 1 à 5, **caractérisée en ce qu'**elle comprend en outre au moins un élément d'assemblage présentant au moins une première partie clipsée sous le panneau contre une paroi verticale de la structure plastique, une seconde partie clipsée sous la surface porteuse de la structure plastique, et une troisième partie pliée de façon à reborder une autre partie de l'étagère ou façonnée pour former une glissière destinée à coopérer avec des moyens supplémentaires d'accrochage en porte à faux à un meuble.

7. Etagère selon l'une des revendications 1 à 6, **caractérisée en ce qu'**elle coulisse par rapport à un support formé en une seule pièce.

8. Etagère selon l'une des revendications 1 à 7, **caractérisée en ce que** la structure plastique est obtenue par air moulding.

9. Procédé de fabrication d'une étagère, en particulier pour un réfrigérateur ou similaire, cette étagère comprenant au moins un panneau et une structure plastique, selon lequel la structure plastique est formée séparément du panneau par moulage, à chaud, le panneau étant assemblé à la structure plastique avant la rétractation complète du plastique.

10. Procédé selon la revendication 9, **caractérisé en ce que** le panneau est assemblé à la structure plastique après l'ouverture du moule, et de préférence hors du moule, avant que le retrait n'atteigne 40 % du retrait total.

11. Procédé selon l'une des revendications 9 ou 10, **caractérisé en ce** l'assemblage du panneau se fait en face inférieure ou supérieure de la structure, le panneau étant éventuellement retenu par clipsage également.

12. Procédé selon l'une des revendications 9 à 11, **caractérisé en ce que**, avant l'assemblage, on procède à un dépôt de colle(s) élastique et/ou d'au moins un joint d'isolation souple sur au moins une partie de la structure devant être au contact du panneau.

13. Procédé selon la revendication 12, **caractérisé en ce que** la colle ou le joint déposé présente une forme conique et/ou **en ce que** la surface du panneau est préalablement traitée, avant l'application de colle, par exemple par sablage, rainurage, gaufrage, formation de rugosités ou traitement plasma, afin d'augmenter la surface de contact entre le plastique et la colle ou le joint et/ou de créer d'autres points d'attache.

14. Procédé selon l'une des revendications 9 à 13, **caractérisé en ce que** la structure plastique est formée par bi-injection.

15. Procédé selon l'une des revendications 9 à 14, **caractérisée en ce que** la structure plastique est formée par air molding.

16. Réfrigérateur comportant au moins une étagère selon les revendications 1 à 8.

## Claims

1. Shelf, particularly for a refrigerator or the like, comprising at least one panel and at least one attached plastic structure **characterized in that** the panel is secured to the structure by shrinking said structure after the panel and the structure have been assembled.

2. Shelf, according to Claim 1, **characterized in that** the attached plastic structure mates with and/or exerts lateral pressure on the edge of the panel.

3. Shelf, according to either of Claims 1 and 2, **characterized in that** the plastic structure is formed with at least two plastics, one of which is more flexible and intended to be in contact with the panel and at least partly covering the other which is more rigid.

4. Shelf according to one of Claims 1 to 3, **characterized in that** the panel is also secured to the structure by clipping and/or bonding.

5. Shelf according to one of Claims 1 to 4, **characterized in that** it further comprises at least one elastic adhesive and/or at least one flexible insulating gasket.

6. Shelf, according to one of Claims 1 to 5, **characterized in that** it further comprises at least one assembly element having at least a first part clipped under the panel against a vertical wall of the plastic structure, a second part clipped under the supporting surface of the plastic structure, and a third part which is bent so that it borders another part of the shelf or fashioned to form a runner intended to collaborate with additional means for the cantilever mounting in a unit.

7. Shelf, according to one of Claims 1 to 6, **characterized in that** it slides with respect to a support formed as a single piece.

8. Shelf, according to one of Claims 1 to 7, **characterized in that** the plastic structure is obtained by air moulding.

9. Method of manufacturing a shelf, particularly for a refrigerator or the like, this shelf comprising at least one panel and one plastic structure, according to which the plastic structure is formed separately from the panel by hot moulding, the panel being assembled with the plastic structure before the plastic has fully shrunk.

10. Method according to Claim 9, **characterized in that** the panel is assembled with the plastic structure after the mould has been opened, and preferably outside the mould, before shrinkage has reached 40% of the total shrinkage.

11. Method according to either of Claims 9 and 10, **characterized in that** the panel is assembled on the underside or top face of the structure, the panel possibly also being held in place by clipping.

12. Method according to one of Claims 9 to 11, **characterized in that**, prior to assembly, (an) elastic adhesive(s) and/or at least one flexible insulating gasket is/are deposited on at least part of the structure that is to be in contact with the panel.

13. Method according to Claim 12, **characterized in that** the adhesive or the gasket deposited has a conical shape and/or **in that** the surface of the panel is pretreated, prior to the application of the adhesive, for example by sandblasting, grooving, goffering, forming roughnesses or by plasma treatment so as to increase the area for contact between the plastic and the adhesive or the gasket and/or so as to create other attachment points.

14. Method according to one of Claims 9 to 13, **characterized in that** the plastic structure is formed by two-shot injection moulding.

15. Method according to one of Claims 9 to 14, **characterized in that** the plastic structure is formed by air moulding.

16. Refrigerator comprising at least one shelf according to Claims 1 to 8.

## Patentansprüche

1. Einlegeboden, insbesondere für einen Kühlschrank oder dergleichen, der mindestens eine Platte und mindestens eine angesetzte Kunststoffstruktur umfasst, **dadurch gekennzeichnet, dass** die Platte mit der Struktur durch deren Schrumpfung nach Zusammenbau von Platte und Struktur fest verbunden ist.

2. Einlegeboden nach Anspruch 1, **dadurch gekennzeichnet, dass** die angesetzte Kunststoffstruktur an der Kante der Platte anliegt und/oder darauf einen seitlichen Druck ausübt.

3. Einlegeboden nach Anspruch 1 oder 2, **dadurch gekennzeichnet, dass** die Kunststoffstruktur von mindestens zwei Kunststoffen gebildet wird, wovon einer nachgiebiger ist, vorgesehen ist, mit der Platte in Berührung zu kommen und den anderen steiferen wenigsten teilweise bedeckt.

4. Einlegeboden nach einem der Ansprüche 1 bis 3, **dadurch gekennzeichnet, dass** die Platte auch durch Festklemmen und/oder Verkleben fest mit der Struktur verbunden worden ist.

5. Einlegeboden nach einem der Ansprüche 1 bis 4, **dadurch gekennzeichnet, dass** er außerdem mindestens einen elastischen Klebstoff und/oder mindestens eine nachgiebige Dichtung umfasst.

6. Einlegeboden nach einem der Ansprüche 1 bis 5, **dadurch gekennzeichnet, dass** er weiterhin mindestens ein Montageelement umfasst, das wenigstens einen ersten Teil, der unter der Platte auf eine vertikale Wand der Kunststoffstruktur geklemmt ist, einen zweiten Teil, der unter die Tragfläche der Kunststoffstruktur geklemmt ist, und einen dritten Teil, der derart umgebogen ist, dass er einen anderen Teil des Einlegebodens einfasst, oder bearbeitet worden ist, um eine Schiene zu bilden, die vorgesehen ist, mit vorstehenden ergänzenden Befestigungsmitteln in dem Möbel zusammenzuwirken, aufweist.

7. Einlegeboden nach einem der Ansprüche 1 bis 6, **dadurch gekennzeichnet, dass** er sich in Bezug auf einen einteilig ausgebildeten Träger hin- und herbewegt.

8. Einlegeboden nach einem der Ansprüche 1 bis 7, **dadurch gekennzeichnet, dass** die Kunststoffstruktur durch Air Moulding erhalten worden ist.

9. Verfahren zur Herstellung eines Einlegebodens, insbesondere für einen Kühlschrank oder dergleichen, der mindestens eine Platte und eine Kunststoffstruktur umfasst, gemäß welchem die Kunststoffstruktur getrennt von der Platte durch Formgebung in der Wärme gebildet und die Platte mit der Kunststoffstruktur vor dem vollständigen Schrumpfen des Kunststoffs verbunden wird.

10. Verfahren nach Anspruch 9, **dadurch gekennzeichnet, dass** die Platte mit der Kunststoffstruktur nach Öffnung der Form und vorzugsweise außerhalb davon zusammengebaut wird, bevor der Schrumpfungsgrad 40 % der Gesamtschrumpfung erreicht hat.

11. Verfahren nach Anspruch 9 oder 10, **dadurch gekennzeichnet, dass** die Verbindung mit der Platte auf der Unterseite oder Oberseite der Struktur erfolgt, wobei die Platte gegebenenfalls ebenfalls durch Festklemmen festgehalten wird.

12. Verfahren nach einem der Ansprüche 9 bis 11, **dadurch gekennzeichnet, dass** vor dem Zusammenbau ein oder mehrere elastische Klebstoffe und/oder mindestens eine nachgiebige Dichtung auf wenigstens einem Teil der Struktur, die mit der Platte in Berührung kommen soll, aufgebracht wird (werden).

13. Verfahren nach Anspruch 12, **dadurch gekennzeichnet, dass** der aufgebrachte Klebstoff oder die aufgebrachte Dichtung eine Kegelform besitzt und/oder **dass** die Oberfläche der Platte vor Aufbringen des Klebstoffs, beispielsweise durch Sandstrahlen, Ritzen, Prägen, Aufrauen oder Plasmabehandlung, vorbehandelt wird, um die Kontaktfläche des Kunststoffs mit dem Klebstoff oder der Dichtung zu vergrößern und/oder weitere Befestigungspunkte zu schaffen.

14. Verfahren nach einem der Ansprüche 9 bis 13, **dadurch gekennzeichnet, dass** die Kunststoffstruktur durch Doppelspritzgießen gebildet wird.

15. Verfahren nach einem der Ansprüche 9 bis 14, **dadurch gekennzeichnet, dass** die Kunststoffstruktur durch Air Moulding gebildet wird.

16. Kühlschrank, der mindestens einen Einlegeboden nach den Ansprüchen 1 bis 8 enthält.
